# EUROPÄISCHE PATENTSCHRIFT

(11) **EP 2 067 568 B1**
(45) Veröffentlichungstag und Bekanntmachung des Hinweises auf die Patenterteilung: **05.01.2011**
(21) Anmeldenummer: 08019181.0
(22) Anmeldetag: 03.11.2008
(51) Int. Cl.: B23P 21/00, B62D 65/02

(54) **Typenvariable Fertigungsstraße**
Type-variable production line
Chaîne de production pour le montage de différents modèles

(30) Priorität: 05.12.2007 DE 102007058432
(43) Veröffentlichungstag der Anmeldung: 10.06.2009
(73) Patentinhaber: Bayerische Motoren Werke Aktiengesellschaft, 80809 München (DE)
(72) Erfinder: Fuss, Peter, 85244 Sigmertshausen (DE); Fischer, Alexander, 85447 Maria Thalheim (DE); Niklas, Ronald, 86356 Neusäss (DE)

(56) Entgegenhaltungen:
- DE-U1- 20 304 022

## Beschreibung

Die Erfindung bezieht sich auf eine typenvariable Fertigungsstraße zum Bearbeiten, insbesondere zum Verbinden von Kraftfahrzeug-Karosseriebauteilen, mit im Zuge der Fertigungsstraße aneinandergrenzend angeordneten, jeweils unterschiedlich typenspezifisch bestückten Bearbeitungs-, insbesondere Geometriestationen zum Positionieren, Fixieren und Bearbeiten der Karosseriebauteile, nach dem Oberbegriff des Patentanspruchs 1.

Bei der in der DE 694 02 086 T2 vorbeschriebenen Fertigungsstraße sind zur Bearbeitung von unterschiedlichen Karosserietypen oder -typvarianten auf gleicher Fertigungsstufe jeweils mehrere Bearbeitungsstationen vorgesehen, die dem zu bearbeitenden Karosserietyp entsprechend jeweils mit einem kompletten Satz von Bearbeitungs-, Transport- und/oder Spannwerkzeugen ausgerüstet sind. Derartige Fertigungsstraßen mit voll ausgestatteten Bearbeitungsstationen in mehrfach redundanter Anordnung erfordern einen hohen Fertigungsmittelaufwand und besitzen, bezogen auf die Anzahl der Werkzeugsysteme, einen geringen Auslastungsgrad, da für jeden Karosserietyp, der die Fertigungsstraße durchläuft, jeweils nur eines der Bearbeitungssysteme zum Einsatz kommt, während die übrigen bis zu einem Wechsel des Karosserietyps ungenutzt bleiben.

Nach einem alternativen, z.B. aus der DE 10 2005 057 602 A1 bekannten Anlagenkonzept ist für jede Fertigungsstufe jeweils nur eine einzige Bearbeitungsstation mit einer typenunabhängigen Grundausstattung vorgesehen, welche je nach dem zu bearbeitenden Karosserietyp mit einem unterschiedlichen Werkzeugsystem bestückt wird. Bei jedem Wechsel des Karosserietyps muß daher der gesamte typenspezifische Werkzeugsatz ausgetauscht werden, was vor allem bei den Positionier- und Fixierwerkzeugen, also etwa den Spannrahmen an Geometriestationen, mit einem erheblichen Zeitaufwand verbunden ist, so dass solche Fertigungsstraßen eine bei einem häufigen Typenwechsel unerwünscht geringe Produktionsrate aufweisen.

Ferner ist aus der DE 203 04 022 U1 eine typenvariable Fertigungsstraße der eingangs genannten Art bekannt, bei der für jeden Fertigungsschritt, also etwa Heften, Ausschweißen, Versiegeln und Nachschweißen, jeweils eine der Anzahl von Karosserietypen entsprechende Vielzahl von typenspezifischen Bearbeitungsstationen vorgesehen ist, an denen die Bauteile nacheinander positioniert und durch separate, je nach Bauteiltyp umrüstbare Bearbeitungssysteme in Form von mehrachsigen Gelenkrobotern bearbeitet werden. Auch ein solches Fertigungskonzept erfordert einen sehr hohen Fertigungsmittelaufwand.

Demgegenüber ist es Aufgabe der Erfindung, eine typenvariable Fertigungsstraße der eingangs genannten Art so auszubilden, dass sich eine große Anzahl unterschiedlicher Karosserietypen oder -typvarianten mit deutlich verringertem Fertigungsmittelaufwand und selbst noch bei einem häufigen Typenwechsel mit einer im Wesentlichen gleichbleibend hohen Produktionsrate bearbeiten lassen.

Diese Aufgabe wird erfindungsgemäß durch die im Patentanspruch 1 gekennzeichnete Fertigungsstraße gelöst.

Erfindungsgemäß ist für jeden Karosserietyp in der Fertigungsstraße je eine typenspezifisch mit den entsprechenden Positionier- und Fixierwerkzeugen ausgestattete Bearbeitungsstation für mehrere aufeinanderfolgende Fügeoperationen vorgesehen und für diese Bearbeitungsstationen insgesamt nur ein einziges Bearbeitungssystem erforderlich, welches nicht nur typenunabhängig, sondern auch auf die unterschiedlichen Fügeoperationen an den einzelnen Bearbeitungsstationen umrüstbar ist und sich innerhalb einer zum Be- und Entladen und zum Fixieren der Karosseriebauteile ohnehin erforderlichen Zeitspanne zu jeder der Bearbeitungsstationen - auch in einer längeren Reihe - translatorisch verfahren lässt, so dass der Fertigungstakt bei einem Wechsel des Karosserietyps im Wesentlichen unverändert beibehalten werden kann. Das Ergebnis ist eine Fertigungsstraße, mit der sich eine innerhalb praxisbezogener Grenzen beliebige Anzahl unterschiedlicher Karosserietypen mit geringem Fertigungsmittelaufwand und einer durch einen Typenwechsel weitgehend unbeeinflussten Taktfrequenz bearbeiten lässt.

In besonders bevorzugter Ausgestaltung der Erfindung enthält das Bearbeitungssystem gemäß Anspruch 2 einen programmgesteuert zwischen den Bearbeitungsstationen verfahrbaren, mit den Bearbeitungswerkzeugen bestückten Mehrachsroboter, und im Hinblick auf einen möglichst raschen Werkzeugwechsel an den einzelnen Bearbeitungsstationen ist der Mehrachsroboter nach Anspruch 3 zweckmäßigerweise automatisch auf entsprechende Wechsel-, z. B. Schweiß-, Klebe-, Löt- oder Nietwerkzeuge umrüstbar. Aus Gründen einer kinematisch einfachen Ausgestaltung ist das Bearbeitungssystem nach Anspruch 4 vorzugsweise linear längs der geradlinig aneinandergereihten Bearbeitungsstationen verfahrbar.

Um den Fertigungsmittelaufwand weiter zu verringern, ist in besonders bevorzugter Weise nach Anspruch 5 zum Bauteiltransport zu den Bearbeitungsstationen ebenfalls nur ein einziges, translatorisch verfahrbares Beschickungssystem vorgesehen, welches die Anbauteile von einer gemeinsamen Ladestation typenabhängig zu der entsprechenden Bearbeitungsstation überführt. Auch dieses enthält in weiterer, baulicher und steuerungsmäßiger Vereinfachung nach Anspruch 6 zweckmäßigerweise einen linear beweglich gesteuerten Transportroboter, welcher auf unterschiedliche, je nach Bauteiltyp wechselbare Transportwerkzeuge umrüstbar ist.

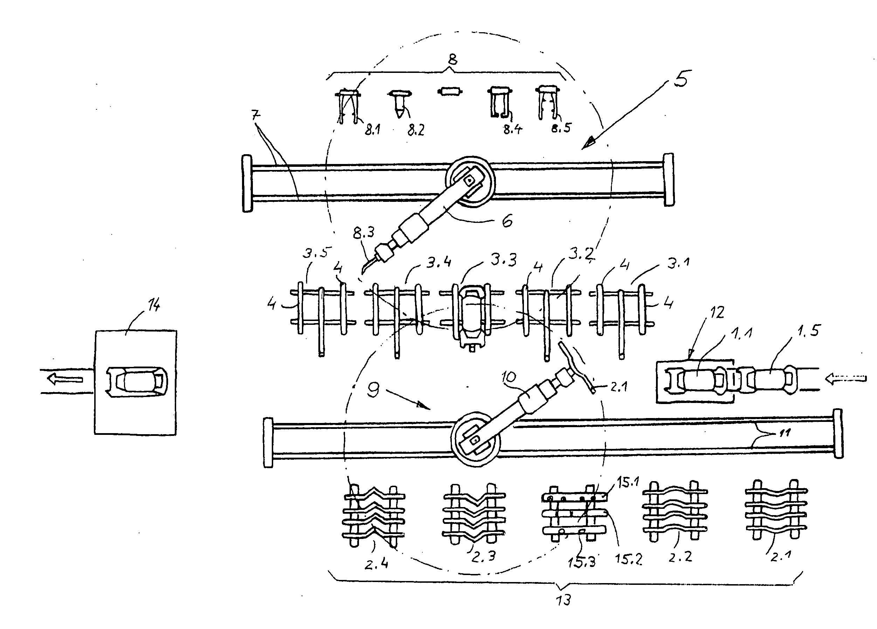

Die Erfindung wird nunmehr anhand eines Ausführungsbeispiels in Verbindung mit der Zeichnung näher erläutert. Diese zeigt in ihrer einzigen Figur die Aufsicht einer Fertigungsstraße im Bereich einer Karosserie-Fertigungsstufe mit fünf typenspezifischen Bearbeitungsstationen in Form von Geometrie- oder Framingstationen in stark schematisierter Darstellung.

Die in der Zeichnung ausschnittsweise im Bereich des Geometriefügens von Karosseriebauteilen, etwa von Karosserie-Bodengruppen 1 und -Seitenteilen 2, dargestellte Fertigungsstraße enthält in Übereinstimmung mit der Anzahl der zu fertigenden Karosserietypen eine Vielzahl von - nämlich bei dem gezeigten Ausführungsbeispiel fünf - in Längrichtung der Fertigungsstraße aneinandergereihten Geometriestationen 3.1 bis 3.5, die jeweils typenspezifisch mit entsprechend unterschiedlichen Positionier- und Seitenspannwerkzeugen 4 zur lagegenauen Fixierung der Karosseriebauteile 1, 2 ausgerüstet sind.

Sämtlichen Geometriestationen 3.1 bis 3.5 ist eine gemeinsames, insgesamt mit 5 bezeichnetes Bearbeitungssystem mit einem Bearbeitungsroboter 6 zugeordnet, weicher längs der Geometriestationen 3 auf Linearführungen 7 verfahrbar ist, so dass sich der in der Zeichnung strichpunktiert umgrenzte Arbeitsbereich des Roboters 6 auf jede der Geometriestationen 3 verlagern lässt.

Um an den einzelnen Geometriestationen 3 typenabhängig unterschiedliche Fügeoperationen durchführen zu können, sind in einem Werkzeugmagazin 8 entsprechende Bearbeitungswerkzeuge 8.1 bis 8.5 bevorratet, auf die der Bearbeitungsroboter 6 - vorzugsweise im Wege eines automatischen Werkzeugwechsels - umrüstbar ist, so dass die Karosseriebauteile 1, 2 an der jeweiligen Geometriestation 3 in einem oder auch nacheinander mehreren, je nach Karosserietyp variabel vorgegebenen Bearbeitungsschritten miteinander verbunden, z. B. verschweißt, verklebt, verlötet und/oder vernietet werden können.

Zum Be- und Entladen der Karosseriebauteile 1, 2 ist für die Geometriestationen 3 femer ein gemeinsames, insgesamt mit 9 bezeichnetes Beschickungssystem mit einem Transportroboter 10 vorgesehen, welcher ebenfalls auf einer Linearführung 11 längs der Geometriestationen 3 derart verfahrbar ist, dass sich sein in der Zeichnung strichpunktierter Arbeitsbereich von einer Zufuhrstation 12 für die unterschiedlichen Bodengruppentypen 1.1....1.5 über die Geometriestationen 3 und eine Ladestation 13, an der die Karosserieseitenteile 2.1....2.4 geordnet nach Seitenteiltypen oder -typvarianten bevorratet werden, bis zu einer Abgabestation 14 verlagern läßt. Der Transportroboter 10 wird an einem Greifermagazin 15 - wiederum vorzugsweise im Wege eines automatischen Werkzeugwechsels - mit dem jeweils benötigten Greiferwerkzeug 15.1...15.3 bestückt und befördert zunächst die an der Zufuhrstation 12 befindliche Bodengruppe 1 und dann - nach einem entsprechenden Werkzeugwechsel - die zugehörigen Seitenteile 2 an die jeweils typenspezifische Geometriestation 3, an der er sie nach Beendigung des Fügeprozesses entnimmt und an die Abgabestation 14 überführt. Anstelle eines einzigen können gewünschtenfalls auch mehrere, synchron einerseits zum Be- und andrerseits zum Entladen der Geometriestationen 3 gesteuerte Transportroboter zum Einsatz kommen, um dadurch die Ladevorgänge zu beschleunigen.

Im Rahmen der Erfindung sind zahlreiche Abwandlungen möglich. So läßt sich das erfindungsgemäße Anlagenkonzept nicht nur für Geometriestationen, sondern generell für Fertigungsstufen verwenden, an denen unterschiedliche Karosserietypen oder -typvarianten in typenspezifischen Barbeitungsstationen werkzeugseitig gleiche oder gleichartige, automatisierte Bearbeitungsschritte erfordern.

## Patentansprüche

1. Typenvariable Fertigungsstraße zum Bearbeiten, insbesondere zum Verbinden von Kraftfahrzeug-Karosseriebauteilen, mit im Zuge der Fertigungsstraße aneinandergrenzend angeordneten, jeweils unterschiedlich typenspezifisch bestückten Bearbeitungs-, insbesondere Geometriestationen zum Positionieren, Fixieren und Bearbeiten der Karosseriebauteile und einem in Abhängigkeit vom jeweiligen Karosserietyp stationsweise translatorisch verfahrbares Bearbeitungssystem, **dadurch gekennzeichnet, dass** die einzelnen, typenspezifischen Bearbeitungsstationen (3) jeweils für mehrere, nacheinander unterschiedliche Bearbeitungsvorgänge vorgesehen sind und sämtlichen Bearbeitungsstationen gemeinsam ein auf entsprechend den unterschiedlichen Bearbeitungsvorgängen an den einzelnen Bearbeitungsstationen wechselbare Bearbeitungswerkzeuge (8.1...8.5) umrüstbares Bearbeitungssystem (5) zugeordnet ist.

2. Fertigungsstraße nach Anspruch 1 oder 2, **dadurch gekennzeichnet, dass** das Bearbeitungssystem (5) einen translatorisch zwischen den Bearbeitungsstationen (3) verfahrbaren Mehrachs-Bearbeitungsroboter (6) enthält.

3. Fertigungsstraße nach Anspruch 3, **dadurch gekennzeichnet, dass** der Mehrachsroboter (6) automatisch auf je nach Karosserietyp und Bearbeitungsvorgang wechselbare Bearbeitungswerkzeuge (8.1...8.5) umrüstbar ist.

4. Fertigungsstraße nach einem der vorhergehenden Ansprüche, **dadurch gekennzeichnet, dass**
das Bearbeitungssystem (5) linear zwischen den geradlinig aneinandergereihten, typenspezifischen Bearbeitungsstationen (3) verfahrbar ist.

5. Fertigungsstraße nach einem der vorhergehenden Ansprüche, **dadurch gekennzeichnet, dass**
zum Bauteiltransport zu den Bearbeitungsstationen (3) diesen gemeinsam eine Ladestation (13) und ein in Abhängigkeit von dem der Ladestation entnommenen Bauteiltyp wechselweise zwischen den einzelnen Bearbeitungsstationen (3) translatorisch verfahrbares Beschickungssystem (9) zugeordnet ist.

6. Fertigungsstraße nach Anspruch 5, **dadurch gekennzeichnet, dass** das Beschickungssystem (9) mindestens einen linear zwischen den Bearbeitungsstationen (3) verfahrbaren, auf unterschiedliche, je nach Bauteiltyp wechselbare Greifwerkzeuge (15.1...15.3) umrüstbaren Transportroboter (10) enthält.

## Claims

1. A type-variable production line for processing, especially connecting, motor vehicle body components, with processing stations, especially geometry stations, arranged adjoining one another in the course of the production line and, in each case, differently type-specifically equipped for positioning, fixing and processing the body components, and with a processing system which can be moved in a translatory manner, stationwise, depending on the respective body type, **characterised in that** the individual, type-specific processing stations (3) are provided, in each case, for a plurality of successive different processing operations, and a processing system (5) which can be converted to processing tools (8.1 ... 8.5) that can be changed in accordance with different processing operations at the individual processing stations, is associated with all the processing stations collectively.

2. A production line according to claim 1 or claim 2, **characterised in that** the processing system (5) contains a multi-axle processing robot (6) which can be moved in a translatory manner between the processing stations (3).

3. A production line according to claim 3, **characterised in that** the multi-axle robot (6) can be automatically converted to processing tools (8.1 ... 8.5) which can be changed depending on the body type and processing operation.

4. A production line according to any one of the preceding claims, **characterised in that** the processing system (5) can be moved linearly between the type-specific processing stations (3) arranged in a straight line next to one another.

5. A production line according to any one of the preceding claims, **characterised in that** a loading station (13) and a feeding system (9), which can be alternately moved in a translatory manner between the individual processing stations (3) depending on the component type removed from the loading station, is associated for component transportation to the processing stations (3), with the latter collectively.

6. A production line according to claim 5, **characterised in that** the feeding system (9) contains at least one transport robot (10) which can be linearly moved between the processing stations (3) and can be converted to different gripping tools (15.1 ... 15.3) which can be changed according to the component type.

## Revendications

1. Chaîne de production pour le montage de différentes modèles, notamment pour traiter, en particulier pour assembler des éléments de carrosserie de véhicules automobiles, comportant :
dans le sens de la ligne de production, des postes de travail juxtaposés, équipés de manière différente, spécifique à un modèle, en particulier des postes de géométrie pour positionner, fixer et travailler des éléments de carrosserie, et un système de travail, mobile en translation par poste en fonction du type d carrosserie respectif,
chaîne de production **caractérisée en ce que**
les différents postes de travail (3), spécifiques à un modèle, sont prévus respectivement pour plusieurs opérations de travail différentes, successives et tous les postes de travail ont en commun un système de travail (5) dont l'équipement peut être transformé, en fonction des différentes opérations de travail à effectuer sur les différents postes de travail avec des outils interchangeables (8.1...8.5).

2. Chaîne de production selon la revendication 1 ou 2,
**caractérisée en ce que**
le système de travail (5) comporte un robot multitâche (6) mobile en translation entre les différents postes de travail (3).

3. Chaîne de production selon la revendication 2,
**caractérisée en ce que**
le robot multitâche (6) est transformé dans son équipement automatiquement suivant le type de carrosserie et le travail à effectuer avec des outils interchangeables (8.1...8.5).

4. Chaîne de production selon l'une des revendications précédentes,
**caractérisée en ce que**
le système de travail (5) est mobile linéairement entre les postes de travail (3) spécifiques à un modèle, et installés les uns à côté des autres en ligne droite.

5. Chaîne de production selon l'une des revendications précédentes,
**caractérisée en ce que**
pour le transport des pièces vers les postes de travail (3), ceux-ci ont en commun un poste de chargement (13) et un système d'alimentation (9), mobile en translation, est associé en alternance entre les différents postes de travail (3), en fonction du type de pièce prélevée dans le poste de chargement.

6. Chaîne de production selon la revendication 5,
**caractérisée en ce que**
le système d'alimentation (9) comporte au moins un robot transporteur (10) dont l'équipement peut être changé avec des outils de préhension (15.1...15.3) interchangeables suivant le type de pièce, et se déplaçant linéairement entre les postes de travail (3).
